# EUROPEAN PATENT APPLICATION

(11) **EP 4 614 447 A1**
(43) Date of publication of application: **10.09.2025**
(21) Application number: 24161416.3
(22) Date of filing: 05.03.2024
(51) Int. Cl.: G06T 15/20, G06T 19/20

(54) **SYNTHETIC DEPTH IMAGES GENERATION FOR TRAINING A MACHINE LEARNING MODEL ESTIMATING MISSING VALUES IN PORTIONS OF A DEPTH IMAGE**

(71) Applicant: Koninklijke Philips N.V., 5656 AG Eindhoven (NL)
(72) Inventor: SOMMER, Karsten, 5656AG Eindhoven (NL); KRUEGER, Sascha, 5656AG Eindhoven (NL); SENEGAS, Julien Thomas, 5656AG Eindhoven (NL)
(74) Representative: Philips Intellectual Property & Standards

(57) **Abstract**

Proposed concepts aim to provide a method for generating pairs of synthetic depth images by first rendering a synthetic reference depth image and then processing this rendered image with a depth data removal algorithm to generate a depth-omitted image that is missing at least a portion of depth data.

## Description

### FIELD OF THE INVENTION

This invention relates to the field of imaging, and in particular to three-dimensional depth imaging.

### BACKGROUND OF THE INVENTION

Images obtained by depth imaging sensors often suffer from missing depth values in certain regions. For example, shadows cast by objects in the field of view of a sensor may result in the sensor being unable to obtain depth data values for the shadowed regions. In addition, the presence of objects with high absorption characteristics can lead to signal dropout leading to further missing depth values in the regions of the image that depict these objects.

These missing depth data values can cause severe problems for various applications that rely on accurate depth imaging. For example, a promising advancement in the area of medical imaging is the use of automated exam preparation. External camera devices with depth sensing capabilities are used to automatically analyse patient set-ups (e.g., depth images may be used in applications such as auto-isocentering for MR, automatic collision detection, vertical centering of the patient support for CT exams, biometrical measurements, or person detection algorithms). These applications rely on accurate depth data measurements and their reliability is therefore greatly impacted by the presence of missing depth data values in depth images.

### SUMMARY OF THE INVENTION

The invention is defined by the claims.

According to an aspect of the invention, there is provided a method for generating synthetic depth images for training a machine learning model, the method comprising: rendering, with a 3D image rendering application, a synthetic reference depth image comprising depth data; and processing the synthetic reference depth image with a depth data removal algorithm to generate a depth-omitted image associated with the synthetic reference depth image, wherein compared to the synthetic reference depth image the associated depth-omitted image has at least one portion of missing depth data.

Proposed concepts thus aim to provide schemes, solutions, concepts, designs, methods, and systems pertaining to generating synthetic depth images for training a machine learning model. In particular, embodiments aim to provide a method for generating pairs of synthetic depth images by first rendering a synthetic reference depth image and then processing this rendered image with a depth data removal algorithm to generate a depth-omitted image that is missing at least a portion of depth data.

In other words, it is proposed to simulate the missing depth data present in real depth images, as a result of shadow effects and other physical processes, by selectively removing a portion of the depth data of a synthetically generated depth image. This results in the production of a depth-omitted image (with missing depth data) and an associated synthetic reference depth image (with no missing depth data) that may be used in the training of a machine learning model for correcting real depth images that have missing depth data.

It has been realised that a machine learning model may be used to restore the missing depth data values present in depth images of real systems taken by depth cameras. Regions of missing depth data values may be present in 3D images due to shadow effects. Depth measurements are unable to be taken in regions of the image associated with objects that are blocked or shadowed by other objects in the field of view. In addition, objects that are highly absorbent at the operating wavelength of the depth imaging system being used, may cause signal dropouts sufficient to result in no depth data being obtained. The inventors of this application realised that a machine learning model trained using a suitable training dataset may be advantageous in generating artificial depth data values to fill in the missing data values.

Providing a suitable dataset for training such a machine learning model may be difficult. Datasets for training machine learning models typically comprise input data and corresponding known output data. For a machine learning model trained to address the current problem, a training dataset would need to comprise a large number of input depth images with missing portions of depth data and corresponding output depth images in which the missing data has been restored. All real depth images will suffer from the shadow effects discussed above to some degree and therefore it is difficult to obtain a large set of "correct" depth images with a full complement of depth data to be used in training. The proposed invention overcomes this issue by the synthetic generation of suitable synthetic reference depth images which comprise both 2D image data and depth data values. Shadow effects in the image are then simulated as a post-processing step by selectively removing certain depth data values. The selection of the depth data values to be removed may aim to mimic certain known physical processes that result in missing depth data values.

Once pairs of synthetic depth images have been generated (including a synthetic reference depth image with a full complement of depth data, and an associated depth-omitted image with at least one portion of missing depth data) they may be used to train a machine learning model. The trained model may then be used to process real depth images having missing data values to artificially restore the missing data.

Ultimately, an improved method for generating synthetic depth images for training a machine learning model may be supported by the proposed concept(s). Such a method may facilitate the provision of a large set of training data that would otherwise be prohibitively costly and/or difficult to create.

In some embodiments, processing the synthetic reference depth image with a depth data removal algorithm may comprise: randomly selecting a region of the synthetic reference depth image; and removing a portion of the depth data of the synthetic reference depth image, based on the randomly selected region, to generate the depth-omitted image. The randomly selected region may simulate an object in the field of view that would interfere with a sensor's ability to obtain depth data measurements in the randomly selected region.

In some embodiments, randomly selecting a region of the synthetic reference depth image may comprise at least one of randomly selecting the position of the region; randomly selecting the size of the region; and randomly selecting the shape of the region. Flexibility in how the randomly selected region is chosen may allow for a more realistic simulation of known objects that may be present in real depth images and would affect the quality of depth data that could be obtained.

In some embodiments, removing a portion of the depth data of the synthetic reference image based on the randomly selected region may comprise removing the depth data associated with the randomly selected region. This region of removed data may simulate a high absorption object present in the virtual field of view that could result in missing depth data.

In some embodiments, processing the synthetic reference depth image with a depth data removal algorithm may comprise: processing the synthetic reference depth image with an edge detection algorithm to detect at least one edge in the synthetic reference depth image; and removing a portion of the depth data of the synthetic reference depth image, based on the detected at least one edge, to generate the depth-omitted image. This embodiment of the depth data removal algorithm may simulate missing depth data values in real depth images caused by shadows at the edge of objects in the field of view.

In some embodiments, processing the synthetic reference depth image with a depth data removal algorithm may comprise removing a portion of the depth data of the synthetic reference depth image associated with at least one object in the synthetic reference depth image to generate the depth-omitted image. The simulated image may contain several known objects. Removing the depth data associated with at least one of these objects may accurately represent the presence of a highly absorbing object in the image.

Although the above exemplary implementations of the depth data removal algorithm are presented in isolation, the present invention is not limited to such and any of the above methods for selecting and removing depth data from the synthetic reference depth image may be used in combination. For example, an edge detection algorithm may be used in combination with an object removal method in order to simulate both shadow effects and the presence of a highly absorbing object.

According to another aspect of the present invention, there is provided a method for training a machine learning model for processing an input depth image comprising at least one portion of missing depth data to produce an output depth image associated with the input depth image and comprising at least one portion of artificial depth data, the method comprising: training the machine learning model using a deep learning algorithm configured to receive a training dataset comprising training input images and associated known output images, wherein at least one training input image and associated known output image comprises a depth omitted image and an associated synthetic reference depth image, and wherein the depth-omitted image and the associated synthetic reference depth image comprise synthetic depth images generated using the method of any described embodiment.

In some embodiments, the machine learning model may be at least one of: a fully convolutional neural network; a U-Net; a GAN; and a Diffusion Probabilistic Model. These types of machine learning model may be best suited to the application of image processing.

According to another aspect of the present invention, there is provided a method for processing a depth image, wherein the method comprises: obtaining an input depth image comprising depth data and at least one portion of missing depth data; and processing the input depth image with a machine learning model, trained using the method of any disclosed embodiment, to produce an output depth image.

In some embodiments, the output depth image differs from the input depth image in that the at least one portion of missing depth data has been restored. In this way, a machine learning model trained using synthetic depth images generated by any proposed method may be used to fill-in missing depth data values that are present in the input depth image due to certain shadow and absorption effects.

In some embodiments, there is provided a computer program comprising code means for implementing any of the methods above when said program is run on a processing system.

According to another aspect of the present invention, there is provided a processing arrangement configured to: render, with a 3D image rendering application, a synthetic reference depth image comprising depth data; and process the synthetic reference depth image with a depth data removal algorithm to generate a depth-omitted image associated with the synthetic reference depth image, wherein compared to the synthetic reference depth image the corresponding depth-omitted image has at least one portion of missing depth data.

In some embodiments, there may be provided a system for processing depth images, the system comprising: a processing arrangement configured to: obtain an input depth image comprising depth data and at least one portion of missing depth data; and process the input depth image with a machine learning model, trained using any of the training methods outlined above, to produce an output depth image.

In some embodiments, the system for processing depth images may further comprise an image sensor configured to obtain the input depth image. In other words, an arrangement for processing a depth image may be integrated into the device used to obtain the depth image.

Thus, there may be proposed concepts for generating synthetic depth images for training a machine learning model based on generating synthetic reference depth images and then selectively removing a portion of the depth data of the synthetic reference depth image to produce a depth-omitted image that is associated with the synthetic reference depth image. These and other aspects of the invention will be apparent from and elicited with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Fig. 1 depicts a simplified flow diagram of a method for generating synthetic depth images for training a machine learning model according to a proposed embodiment;
Fig. 2 depicts a simplified flow diagram of a method for generating synthetic depth images for training a machine learning model according to another proposed embodiment;
Figs. 3A and 3B depict a synthetic reference depth image and associated depth-omitted image generated by a method according to a proposed embodiment;
Figs. 4A and 4B depict a person detection algorithm applied to depth images with and without missing depth data values respectively.
Fig. 5 is a simplified block diagram of a system for processing depth images according to a proposed embodiment; and
Fig. 6 illustrates a simplified block diagram of an example of a computer within which one or more parts of an embodiment may be employed.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposed of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should be understood that the same reference numerals are used throughout the Figures to indicate the same or similar parts.

Variations to the disclosed embodiments can be understood and effected by those skilled in the art of practicing the claimed invention, from a study of the drawings, the disclosure, and the appended claims. In the claims, the word "comprising" does not exclude other elements or steps and the indefinite article "a" or "an" does not exclude a plurality.

Implementations in accordance with the present disclosure relate to various techniques, methods, schemes and/or solutions pertaining to generating synthetic depth images for use in training a machine learning model. According to proposed concepts, several possible solutions may be implemented separately or jointly. That is, although these possible solutions may be described below separately, two or more of these possible solutions may be implemented in one combination or another.

Embodiments of the invention aim to provide a concept for generating synthetic depth images which may be suitable to be used as part of a training dataset of images for training a machine learning model. The trained machine learning model may then be used to process depth images that have at least one portion of missing depth data in order to artificially fill in the missing depth data values. In particular, it is proposed to generate pairs of associated depth images by first rendering a synthetic reference depth image using a 3D image rendering application, and then selectively remove a portion of the depth data of the synthetic reference depth image to generate an associated depth-omitted image.

Depth images, or depth maps, typically comprise a 2D array of pixels, the values of which contain information about the distance between the camera taking the image and the object being imaged. Depth imaging sensors may be realised in various different ways including time-of-flight sensors (which measure depth by measuring the time it takes for light to travel from the imaging sensor to an object in the field of view and back), structured light sensors (which measure depth by measuring the distortion of a particular light pattern projected by the light sensor when it is reflected by objects in the field of view), and stereo vision sensors (which leverage multiple imaging sensors with different view positions). The depth sensor may use various different wavelengths of light and may be integrated into a 2D imaging sensor operating at any wavelength range.

Depth images taken by a suitable depth image device may often suffer from missing depth data values. Objects in the field of view of the imaging device cast shadows on the areas around them that may interfere with depth measurements since typical depth sensors rely on the transmission and reflection of light. This may result in certain regions of a depth image missing depth data values. Other causes of missing depth data values may include the presence of highly absorbing objects that don't reflect light sufficiently well for depth measurements to be obtained.

These missing depth data values may interfere with many of the applications of depth images. Depth images allow for more detailed information to be obtained about a particular scene which may prove useful for various technical applications such as autonomous systems, virtual reality, and clinical applications. In particular, although a small portion of missing depth data values may be insignificant when depth data is being analysed by eye, even a small number of missing pixel values may cause problems when a depth image is processed using a neural network or machine learning algorithm. For example, a recent development in clinical workflows is the use of automated exam preparation. External camera devices including depth imaging capabilities are used to accurately localise anatomical key points and devices in an examination set-up to automatically determine the scan position. These applications typically utilise object detection, edge detection, or person detection machine learning models. Erroneous missing depth data values due to shadow effects or the presence of highly absorbing objects such as medical equipment may result in the output of these models being unreliable.

A machine learning model may be trained to process an input image that has a portion of missing data and output an output image for which the missing data has been restored. These output images may result in much more reliable outcomes in further processing steps. Training a machine learning model for such a purpose requires a large dataset of training images. The training dataset must contain a plurality of input images and corresponding output images. For the present application of correcting depth images that contain erroneous missing depth data, producing such a dataset may be difficult. All images taken with 3D depth cameras will suffer from shadow effects to some degree and therefore it is difficult to obtain a set of depth images that have a full complement of depth data. The present invention is therefore concerned with an improved method of generating training images for the training of a machine learning model.

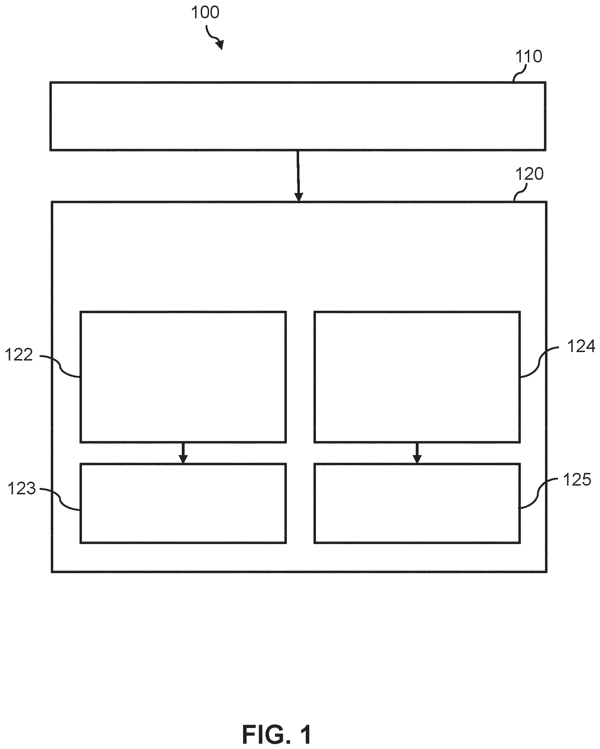

Referring now to Fig. 1, there is depicted a simplified flow diagram of a method 100 for generating synthetic depth images for training a machine learning model.

The method commences with a step 110 comprising rendering, with a 3D image rendering application, a synthetic reference depth image comprising depth data. Any suitable 3D image rendering application may be used including any suitable software that permits the generation of images containing three-dimensional data. The synthetic reference depth image may be rendered to depict a wide variety of objects or scenes, which may depend on the intended application of the machine learning model. For example, the synthetic reference depth image may be rendered to depict a patient and CT scanner examination set-up.

Once the synthetic reference depth image has been generated, the method proceeds to a step 120 which comprises processing the synthetic reference depth image with a depth data removal algorithm to generate a depth-omitted image associated with the synthetic reference depth image, wherein compared to the synthetic reference depth image the associated depth-omitted image has at least one portion of missing depth data.

In this exemplary embodiment, processing the synthetic reference depth image with a depth data removal algorithm comprises four sub-steps. In the step 122 the synthetic reference depth image is processed with an edge detection algorithm to detect at least one edge in the synthetic reference depth image. The step 123 proceeds from the step 122 and comprises removing a portion of the depth data of the synthetic reference depth image, based on the detected at least one edge, to generate the depth-omitted image. Removal of depth data based on the detection of edges in the synthetic reference depth image may permit the depth-omitted image to mimic the presence of shadow effects in real depth images. Shadow effects in real data result in missing depth data values in the regions surrounding the edges of objects as they cast a shadow on regions of the field of view behind them. By selecting depth data to be removed based on the detection of edges, these shadow effects may be simulated.

The sub-steps 124 and 125 comprise randomly selecting a region of the synthetic reference depth image; and removing a portion of the depth data of the synthetic reference depth image, based on the randomly selected region, to generate the depth-omitted image, respectively. Further, in this example the step 125 more specifically comprises of removing the depth data associated with the randomly selected region. Steps 124 and 125 may permit the simulation of a highly absorbing object in the field of view of a depth image sensor. In this exemplary embodiment, the step 124 comprises at least one of: randomly selecting the position of the region; randomly selecting the size of the region; and randomly selecting the shape of the region.

The method 100 therefore results in the production of a synthetic reference image and an associated depth-omitted image that differs from the synthetic reference image in that the depth-omitted image has at least one portion of missing depth data. This may mimic the missing portions of depth data seen in real 3D depth images due to shadow effects and the presence of highly absorbing objects.

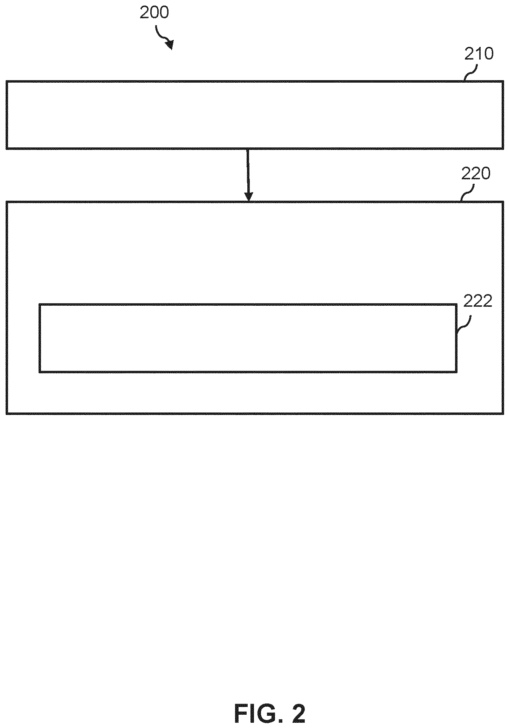

Although in the method 100, the step 125 comprises removing the depth data associated with the randomly selected region in alternative embodiments this need not be the case. Alternatively, the randomly selected region could be used to select the data to be removed in another manner. For example, depth data may be removed in the region at the edge of the randomly selected region. Similarly other aspects of the method 100 may be implemented differently in alternative embodiments. For example, rather than being chosen entirely at random, certain aspects of the randomly selected region may be fixed for example, such as the number of randomly selected pixels, or the shape of the randomly selected region. In this way, there may be some control over some of the parameters of the randomly selected region in order that accurate modelling of a highly absorbing object may be achieved. In addition, although in the method 100 the step 120 comprises the sub-steps 122-125, in alternative embodiments the depth data removal algorithm may be implemented differently. An example of an alternative implementation is shown in Fig. 2.

Referring now to Fig. 2, there is depicted a method 200 for generating synthetic depth images for training a machine learning model according to an alternative embodiment.

The method commences with a step 210 comprising rendering, with a 3D image rendering application, a synthetic reference depth image comprising depth data. The image is rendered to depict a plurality of objects.

The method then proceeds to a step 220 comprising processing the synthetic reference depth image rendered in step 210 with a depth data removal algorithm to generate a depth-omitted image associated with the synthetic reference depth image. In this exemplary embodiment the depth data removal algorithm comprises the sub-step 222 of removing depth data associated with at least one object depicted in the synthetic reference depth image. This may accurately model the effect that the presence of a highly absorbing object in the field of view has on images obtained by depth camera systems.

The methods 100 and 200 are specific examples of how the depth data removal algorithm of the present invention may be implemented, but the present invention is not limited to such examples. More complicated algorithms may utilise known information about depth sensing systems and objects expected to be present in a typical field of view. For example, in the context of depth images used to assess medical imaging set-ups, the synthetic reference depth image may be rendered to depict typical patient and medical device set ups. Ray tracing can then be combined with the known reflective and absorbent properties of simulated objects in the synthetic reference depth image to predict the effects of shadows and absorption on the resultant depth image and remove a portion of the depth data based on this prediction.

Although discussed mainly in the context of missing depth data values due to shadow effects and highly absorbing objects, the concepts of the present invention may also be applied to erroneous depth data values caused, for example, by the finite operating range of the depth sensor being used. Depth cameras typically have a relatively small operating range which may result in wrap-around artifacts or missing depth data values for objects at large distances from the camera. The depth data removal algorithm may be further configured to simulate these effects, thereby enabling a machine learning model trained using synthetic reference depth images and associated depth-omitted images to correct for such erroneous values.

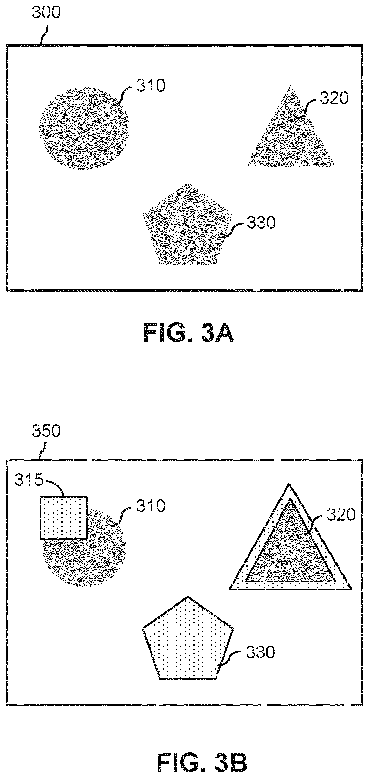

Referring now to Figs. 3A and 3B, there is depicted a synthetic reference depth image 300 and associated depth-omitted image 350 generated by a method according to a proposed embodiment.

The synthetic reference depth image 300 has been rendered in a suitable 3D image rendering application. It comprises depth data associated with three objects in a virtual field of view: 310, 320, and 330. According to a method of a proposed embodiment of the present invention, the synthetic reference depth image 300 is processed with a depth data removal algorithm to generate the depth-omitted image 350, which differs from the synthetic reference depth image 300 in that a portion of the depth data associated with the synthetic reference depth image 300 is missing. Portions of missing depth data are indicated by the dotted regions in Fig. 3B.

The depth-omitted image 350 also depicts the objects 310, 320, and 330. However, portions of the depth data associated with these objects are missing. In the depth-omitted image 350 a square shaped region 315 of depth data is missing, resulting in the image 350 only containing partial depth data for the object 310. The position and size of the square shaped region 315 may have been randomly selected in the depth data removal algorithm. The presence of the region 315 mimics the presence of a highly absorbing object in the line of sight that blocks depth data from being obtained for the object 310.

In generating the depth-omitted image 350 a portion of the depth data of the synthetic reference depth image 300 that is associated with the edge of the object 320 has been removed. This may mimic the shadow effect seen around objects in depth images taken by depth image sensors. The depth-omitted image 350 further differs from the synthetic reference depth image 300 in that the depth data associated with the object 330 has been removed. This is another way in which a high absorbing object in the field of view may be simulated. The synthetic reference image 300 and the associated depth-omitted image 350 may be used as an image pair for training a machine learning algorithm.

A machine-learning algorithm is any self-training algorithm that processes input data in order to produce or predict output data. Here, the input data would be an input depth image comprising at least one portion of missing depth data and the output data would be an output depth image associated with the input depth image and comprising at least one portion of artificial depth data.

Suitable machine-learning algorithms for being employed in the present invention will be apparent to the skilled person. Examples of suitable machine-learning algorithms include decision tree algorithms and artificial neural networks. Other machine-learning algorithms such as logistic regression, support vector machines or Naive Bayesian models are suitable alternatives. Purely by way of example, the machine learning model may employ a Convolutional Neural Network, because CNNs have been proven to be particularly successful at analysing images, with a much lower error rate than other types of neural network. For the specific application of image inpainting problems: U-Nets, GANs, and Diffusion Probabilistic Models have also been shown to be particularly useful.

The structure of an artificial neural network (or, simply, neural network) is inspired by the human brain. Neural networks are comprised of layers, each layer comprising a plurality of neurons. Each neuron comprises a mathematical operation. In particular, each neuron may comprise a different weighted combination of a single type of transformations (e.g. the same type of transformation, sigmoid etc. but with different weightings). In the process of processing input data, the mathematical operation of each neuron is performed on the input data to produce a numerical output, and the outputs of each layer in the neural network are fed into the next layer sequentially. The final layer provides the output.

There are several types of neural network, such as convolutional neural networks (CNNs) and recurrent neural networks (RNNs). CNNs typically contain several layers, including a convolutional layer, a pooling layer, and a fully connected layer. The convolutional layer consists of a set of learnable filters and extracts features from the input. The pooling layer is a form of non-linear down-sampling, reducing the data size by combining the outputs of a plurality of neurons in one layer into a single neuron in the next layer. The fully connected layer connects each neuron in one layer to all the neurons in the next layer.

Methods of training a machine-learning algorithm are well known. Typically, such methods comprise obtaining a training dataset, comprising training input data entries and corresponding training output data entries. An initialized machine-learning algorithm is applied to each input data entry to generate predicted output data entries. An error between the predicted output data entries and corresponding training output data entries is used to modify the machine-learning algorithm. This process can be repeated until the error converges, and the predicted output data entries are sufficiently similar (e.g. ±1%) to the training output data entries. This is commonly known as a supervised learning technique.

For example, weightings of the mathematical operation of each neuron may be modified until the error converges. Known methods of modifying a neural network include gradient descent, backpropagation algorithms and so on.

In the context of the present invention the training input data entries for a machine learning model correspond to depth-omitted images generated by any proposed method. The training output data entries correspond to the synthetic reference depth images associated with each of the depth-omitted images. The training dataset may include synthetic images rendered to depict a diverse set of persons, objects, and backgrounds, to ensure a robust model. In other words, the machine learning model may be trained using a deep learning algorithm configured to receive an array of training inputs and respective known outputs, wherein a training input comprises a generated depth-omitted image comprising at least one portion of missing depth data and a respective known output comprises the associated synthetic reference depth image that has been rendered with a full complement of depth data. In this way, the machine learning model may be trained to output a depth image containing portions of artificial depth data that fill in the missing depth data in an input depth image that has been provided to the machine learning model.

Therefore, the present invention further proposes a method of processing depth images that contain missing portions of depth data. The proposed method comprises obtaining an input depth image that contains at least one portion of missing depth data (this may be due to physical processes such as shadow effects). The input depth image is then processed with a machine learning model to generate an output depth image that contains at least one portion of artificially generated depth data. The machine learning model has been trained as described above using a dataset of images generated by the method proposed by the present invention. In this way, the machine learning method is used to fill in missing depth data values in a 3D image.

Images processed using the above-described machine learning model may be used in various applications. For example, processed depth images may be used in automatic collision detection, auto-isocentering for MR, and vertical centering of the table for CT. This may result in a more reliable application of these methods than using unprocessed depth images obtained directly from a depth sensor. If the target application for a depth image involves the use of a neural network, a joint training strategy across the two models may be implemented. To this end, the weights of the target application neural network are kept fixed, and the resulting error is used as a loss function during training of the machine learning model used to correct missing depth data values. Alternatively, depth-omitted images generated using any proposed method of the present invention may be used within a training data set for the target application network, resulting in a target application neural network that is more robust to the presence of shadowed regions in input images.

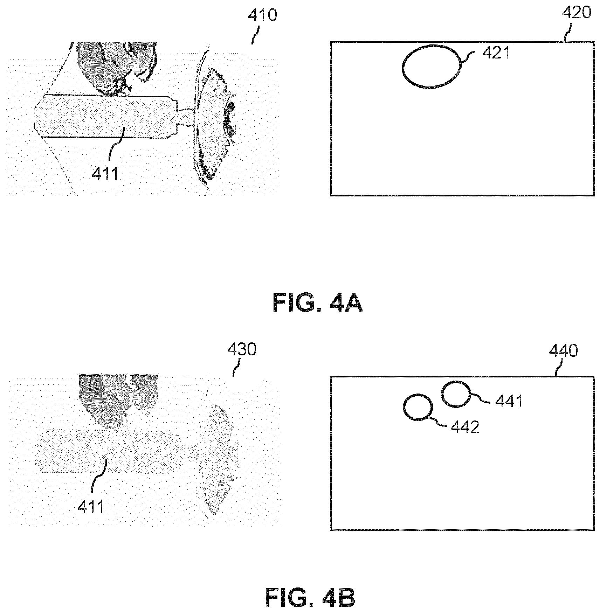

Referring now to Fig. 4A, there is depicted a person detection algorithm as applied to a depth image 410 with missing depth data values.

The depth image 410 is taken with a birds-eye imaging sensor of a clinical set up. The darkest regions of the image depict regions of missing depth data, for which the pixel values of the depth map have been set to zero due to the inability of the system to calculate depth values for these regions. For example, missing depth data values are seen around the edge of the object 411 due to shadow effects. The image 420 shows the spatial activation pattern of a person detection neural network applied to the depth image 410. Only a single person 421 is detected.

Fig. 4B shows the same person detection algorithm applied to a depth image 430 with no missing depth data values.

The depth image 430 is obtained by processing the depth image 410 with a machine learning algorithm according to the depth image processing method of the present invention. As a result, the missing depth data values of the image 410 have been filled in with artificial depth data values such that the depth image 430 has a full complement of depth data values. As can be seen in Fig. 4B, the object 411 no longer has missing depth data values around its edge. A person detection neural network is applied to the depth image 430 and the special activation pattern 440 produced. In this instance, the algorithm (correctly) detects two people in the image as can be seen by the outlines 441 and 442.

Figs. 4A and 4B show how the presence of missing depth data values may be detrimental when it comes using depth images for automatic applications. Although features of the image may still be evident to the eye, the erroneous missing depth data values cause significant problems for machine learning models trained to detect certain features in depth images.

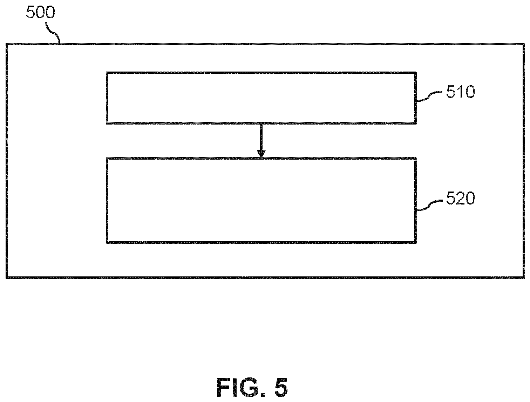

Referring now to Fig. 5, there is depicted a simplified block diagram of a system 500 for processing depth images according to a proposed embodiment.

The system 500 comprises an image sensor 510 and a processing arrangement 520. The image sensor 510 is configured to obtain depth images comprising 2D image data and associated depth data. The image sensor 510 provides the obtained depth images to the processing arrangement 520.

The processing arrangement 520 is configured to receive an input depth image from the image sensor 510. The input depth image contains at least one portion of missing depth data (which may be caused by shadow effects). The processing arrangement 520 is configured to process the input depth image with a machine learning model to output an output depth image that contains at least one portion of artificial depth data. In other words, the processing arrangement 520 is adapted to fill in at least a portion of the missing depth data values of the input depth image using a trained machine learning model.

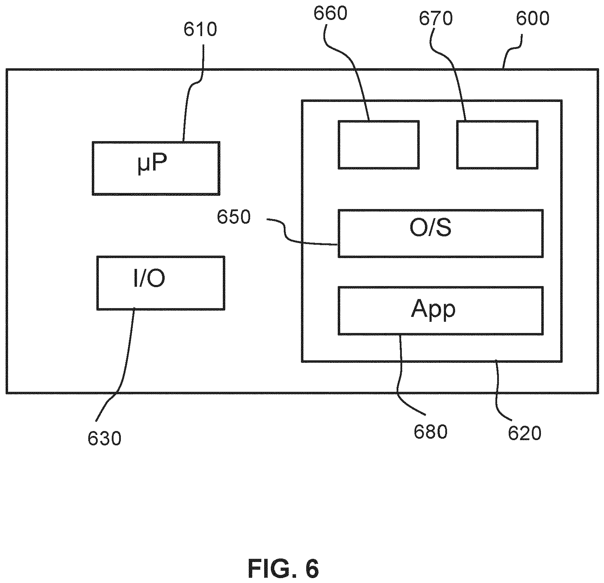

Fig. 6 illustrates an example of a computer 600 within which one or more parts of an embodiment may be employed. Various operations discussed above may utilize the capabilities of the computer 600. In this regard, it is to be understood that system functional blocks can run on a single computer or may be distributed over several computers and locations (e.g., connected via internet).

The computer 600 includes, but is not limited to, PCs, workstations, laptops, PDAs, palm devices, servers, storages, and the like. Generally, in terms of hardware architecture, the computer 600 may include one or more processors 610, memory 620 and one or more I/O device 630 that are communicatively coupled via a local interface (not shown). The local interface can be, for example but not limited to, one or more buses or other wired or wireless connections, as is known in the art. The local interface may have additional elements such as controllers, buffers (caches), drivers, repeaters, and receivers, to enable communications. Further, the local interface may include address, control and/or data connections to enable appropriate communications among the aforementioned components.

The processor 610 is a hardware device for executing software that can be stored in the memory 620. The processor 610 can be virtually any custom made or commercially available processor, a central processing unit (CPU), a digital signal processor (DSP), or an auxiliary processor among several processor associated with the computer 600, and the processor 610 may be a semiconductor-based microprocessor (in the form of a microchip) or a microprocessor.

The memory 620 can include any one or combination of volatile memory elements (e.g., random access memory (RAM), such as dynamic random access memory (DRAM), static random access memory (SRAM, etc.) and non-volatile memory elements (e.g., ROM, erasable programmable read only memory (EPROM), electronically erasable programmable read only memory (EEPROM), programmable read only memory (PROM), tape, compact disc read only memory (CD-ROM), disk, diskette, cartridge, cassette or the like, etc.). Moreover, the memory 620 may incorporate electronic, magnetic, optical, and/or other types of storage media. Note that the memory 620 can have a distributed architecture, where various components are situated remote from one another, but can be accessed by the processor 610.

The software in the memory 620 may include one or more separate programs, each of which comprises an ordered listing of executable instructions for implementing logical functions. The software in the memory 620 includes a suitable operating system (O/S) 650, compiler 660, source code 670, and one or more applications 680 in accordance with exemplary embodiments. As illustrated the application 680 comprises numerous functional components for implementing the features and operations of the exemplary embodiments. The application 680 of the computer 600 may represent various applications, computational units, logic, functional units, processes, operations, virtual entities, and/or modules in accordance with exemplary embodiments, but the application 680 is not meant to be a limitation.

The operating system 650 controls the execution of other computer programs, and provides scheduling, input-output control, file and data management, memory management, and communication control and related services. It is contemplated by the inventors that the application 680 for implementing exemplary embodiments may be applicable on all commercially available operating systems.

Application 680 may be a source program, executable program (object code), script, or any other entity comprising a set of instructions to be performed. When a source program, then the program is usually translated via a compiler (such as the compiler 660), assembler, interpreter, or the like, which may or may not be included within the memory 620, so as to operate properly in connection with the O/S 450. Furthermore, the application 680 can be written as an object orientated programming language, which has classes of data and methods, or a procedure programming language, which has routines, subroutines, and/or functions, for example but not limited to, C, C++, C#, Pascal, Python, BASIC, API calls, HTML, XHTML, XML, ASP scripts, JavaScript, FORTRAN, COBOL, Perl, Java, ADA, .NET, and the like.

The I/O devices 630 may include input device such as, for example but not limited to, a mouse keyboard, scanner, microphone, camera, etc. Furthermore, the I/O devices 630 may also include output devices, for example but not limited to a printer, display, etc. Finally, the I/O devices 630 may further include devices that communicate both inputs and outputs, for instance but not limited to, a NIC or modulator/demodulator (for accessing remote devices, other files, devices, systems, or a network), a radio frequency (RF) or other transceiver, a telephonic interface, a bridge, a router, etc. The I/O devices 630 also include components for communicating over various networks, such as the Internet or intranet.

If the computer 600 is a PC, workstation, intelligent device or the like, the software in the memory 620 may further include a basic input output system (BIOS) (omitted for simplicity). The BIOS is a set of essential software routines that initialize and test hardware at start-up, start the O/S 650, and support the transfer of data among the hardware devices. The BIOS is stored in some type of read-only-memory, such as ROM, PROM, EPROM, EEPROM or the like, so that the BIOS can be executed when the computer 600 is activated.

When the computer 600 is in operation, the processor 610 is configured to execute software stored within the memory 620, to communicate data to and from the memory 620, and to generally control operations of the computer 600 pursuant to the software. The application 680 and the O/S 650 are read, in whole or in part, by the processor 610, perhaps buffered within the processor 610, and then executed.

When the application 680 is implemented in software it should be noted that the application 680 can be stored on virtually any computer readable medium for use by or in connection with any computer related system or method. In the context of this document, a computer readable medium may be an electronic, magnetic, optical, or other physical device or means that can contain or store a computer program for use by or in connection with a computer related system or method.

The application 680 can be embodied in any computer-readable medium for use by or in connection with an instruction execution system, apparatus, or device, such as a computer-based system, processor-containing system, or other system that can fetch the instructions from the instruction execution system, apparatus, or device and execute the instructions. In the context of this document, a "computer-readable medium" can be any means that can store, communicate, propagate, or transport the program for use by or in connection with the instruction execution system, apparatus, or device. The computer readable medium can be, for example but not limited to, an electronic, magnetic, optical, electromagnetic, infrared, or semiconductor system, apparatus, device, or propagations medium.

The methods of Figs. 1 and 2, and the system of Fig. 5, may be implemented in hardware or software, or a mixture of both (for example, as firmware running on a hardware device). To the extent that an embodiment is implemented partly or wholly in software, the functional steps illustrated in the process flow diagrams may be performed by suitably programmed physical computing devices, such as one or more central processing units (CPUs) or graphics processing units (GPUs). Each process - and its individual component steps as illustrated in the flow diagrams - may be performed by the same or different computing devices. According to embodiments, a computer-readable storage medium stores a computer program comprising computer program code configured to cause one or more physical computing devices to carry out a method as described above when the program is run on the one or more physical computing devices.

Storage media may include volatile and non-volatile computer memory such as RAM, PROM, EPROM, and EEPROM, optical discs (like CD, DVD, BD), magnetic storage media (like hard discs and tapes). Various storage media may be fixed within a computing device or may be transportable, such that the one or more programs stored thereon can be loaded into a processor.

To the extent that an embodiment is implemented partly or wholly in hardware, the blocks shown in the block diagrams of Figs. 5 and 6 may be separate physical components, or logical subdivisions of single physical components, or may be all implemented in an integrated manner in one physical component. The functions of one block shown in the drawings may be divided between multiple components in an implementation, or the functions of multiple blocks shown in the drawings may be combined in single components in an implementation. Hardware components suitable for use in embodiments of the present invention include, but are not limited to, conventional microprocessors, application specific integrated circuits (ASICs), and field-programmable gate arrays (FPGAs). One or more blocks may be implemented as a combination of dedicated hardware to perform some functions and one or more programmed microprocessors and associated circuitry to perform other functions.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. If a computer program is discussed above, it may be stored/distributed on a suitable medium, such as an optical storage medium or a solid-state medium supplied together with or as part of other hardware, but may also be distributed in other forms, such as via the Internet or other wired or wireless telecommunication systems. If the term "adapted to" is used in the claims or description, it is noted the term "adapted to" is intended to be equivalent to the term "configured to". Any reference signs in the claims should not be construed as limiting the scope.

The flow diagrams and block diagrams in the Figures illustrate the architecture, functionality, and operation of possible implementations of systems, methods, and computer program products according to various embodiments of the present invention. In this regard, each block in the flow diagrams or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in reverse order, depending upon the functionality involved. It will also be noted that each block of the block diagrams and/or flow diagrams, and combinations of blocks in the block diagrams and/or flow diagrams, can be implemented by special purpose hardware-based systems that perform the specified functions or acts or carry out combinations of special purpose hardware and computer instructions.

## Claims

1. A method (100) for generating synthetic depth images for training a machine learning model, the method comprising:
rendering (110), with a 3D image rendering application, a synthetic reference depth image comprising depth data; and
processing (120) the synthetic reference depth image with a depth data removal algorithm to generate a depth-omitted image associated with the synthetic reference depth image, wherein compared to the synthetic reference depth image the associated depth-omitted image has at least one portion of missing depth data.

2. The method of claim 1, wherein processing the synthetic reference depth image with a depth data removal algorithm comprises:
randomly selecting (124) a region of the synthetic reference depth image; and
removing (125) a portion of the depth data of the synthetic reference depth image, based on the randomly selected region, to generate the depth-omitted image.

3. The method of claim 2, wherein randomly selecting a region of the synthetic reference depth image comprises at least one of:
randomly selecting the position of the region;
randomly selecting the size of the region; and
randomly selecting the shape of the region.

4. The method of any of claims 2 and 3, wherein removing a portion of the depth data of the synthetic reference depth image based on the randomly selected region comprises removing the depth data associated with the randomly selected region.

5. The method of any preceding claim, wherein processing the synthetic reference depth image with a depth data removal algorithm comprises:
processing (122) the synthetic reference depth image with an edge detection algorithm to detect at least one edge in the synthetic reference depth image; and
removing (123) a portion of the depth data of the synthetic reference depth image, based on the detected at least one edge, to generate the depth-omitted image.

6. The method of any preceding claim, wherein processing the synthetic reference depth image with a depth data removal algorithm comprises:
removing (222) a portion of the depth data of the synthetic reference depth image associated with at least one object in the synthetic reference depth image to generate the depth-omitted image.

7. A method for training a machine learning model for processing an input depth image comprising at least one portion of missing depth data to produce an output depth image associated with the input depth image and comprising at least one portion of artificial depth data, the method comprising:
training the machine learning model using a deep learning algorithm configured to receive a training dataset comprising training input images and associated known output images,
wherein at least one training input image and associated known output image comprises a depth-omitted image and an associated synthetic reference depth image, and
wherein the depth-omitted image and the associated synthetic reference depth image comprise synthetic depth images generated using the method of any of claims 1-6.

8. The method of claim 7 wherein the machine learning model is at least one of:
a fully convolutional neural network;
a U-Net;
a GAN; and
a Diffusion Probabilistic Model.

9. A method for processing a depth image, wherein the method comprises:
obtaining an input depth image comprising depth data and at least one portion of missing depth data; and
processing the input depth image with a machine learning model, trained using the method of any of claims 7 and 8, to produce an output depth image.

10. The method of claim 9, wherein the output depth image differs from the input depth image in that the at least one portion of missing depth data has been restored.

11. A computer program comprising code means for implementing the method of any preceding claim when said program is run on a processing system.

12. A processing arrangement configured to:
render, with a 3D image rendering application, a synthetic reference depth image comprising depth data; and
process the synthetic reference depth image with a depth data removal algorithm to generate a depth-omitted image associated with the synthetic reference depth image, wherein compared to the synthetic reference depth image the corresponding depth-omitted image has at least one portion of missing depth data.

13. A system (500) for processing a depth image, the system comprising:
a processing arrangement (520) configured to:
obtain an input depth image comprising depth data and at least one portion of missing depth data; and
process the input depth image with a machine learning model, trained using the method of any of claims 7 and 8, to produce an output depth image.

14. The system of claim 13, wherein the system further comprises:
an image sensor (510) configured to obtain the input depth image.
